Europäisches Patentamt

(19) European Patent Office    (11) Publication number: **0 035 823**

Office européen des brevets    **A1**

(12)    **EUROPEAN PATENT APPLICATION**

(21) Application number: **81300170.8**    (51) Int. Cl.³: **A 01 K 39/00**

(22) Date of filing: **15.01.81**

(30) Priority: **06.03.80 US 127595**

(43) Date of publication of application:
**16.09.81 Bulletin 81/37**

(84) Designated Contracting States:
**BE DE FR GB IT NL SE**

(71) Applicant: **CHORE-TIME EQUIPMENT, INC.**
**State Road 15**
**Milford Indiana 46542(US)**

(72) Inventor: **Peppler, William Stuart**
**4505 Autumn Lv. Tr.**
**Decatur Alabama 35603(US)**

(74) Representative: **Waite, Anthony William et al,**
**MARKS & CLERK Alpha Tower ATV Centre**
**Birmingham B1 1TT(GB)**

(54) Trough feeder.

(57) Apparatus (15) for distributing feed to caged poultry (12) and the like is disclosed. The apparatus (15) comprises an elongated trough (21) for receiving feed, and an open-topped tube conveyor (31) disposed within the trough (21). A clip (36) is provided for securing the tube conveyor (31) in and to the trough (21). A tube shield (51) extends from a trough wall (23) down over the conveyor tube (33). A baffle (61) extends downwardly from the tube shield (51) over each feed-dispensing tube aperture (35) to prevent observation of feed particle dispensing motion by the receiving poultry (12).

EP 0 035 823 A1

Croydon Printing Company Ltd.

DESCRIPTION

"TROUGH FEEDER"

This invention relates generally to feeding apparatus
for poultry and like animals and more particularly
concerns a low-cost yet effective trough feeder for
use with caged poultry.

In recent years, advances in poultry care equipment
have provided relatively trouble-free delivery of
feed rations to caged poultry.  U.S. Patents 3,611,995;
3,776,191; and others disclose and claim such equipment.

It is the general object of the present invention to
provide a trough and feed conveyor unit at minimal
cost which dispenses particulate feed and then offers
the dispensed feed to poultry or like animals with
maximum effectiveness.

It is another object of the invention to provide a
trough and feed conveyor unit which can be erected
quickly and inexpensively by even inexperienced personnel.

Yet another object is to provide a trough and feed
conveying system which inhibits feed separation or
improper feed distribution.

Still another object is to provide a trough feed conveying system which discourages poultry from picking
over feed which has been dispensed into the trough.

Other objects and advantages of the invention will
become apparent upon reading the following detailed description and upon reference to the drawings. Like
reference numerals refer to like parts throughout the
drawings.

FIGURE 1 is a perspective view showing a novel trough
and feed conveying system as it appears when it is
to be used with an array of poultry-containing cages;

FIG. 2 is a fragmentary elevational view showing the
feed conveyor and trough of the present invention as
the troughs and conveyors appear when installed adjacent the poultry-containing cages;

FIG. 3 is an end view in partial section showing the
conveyor and trough in greater detail;

FIG. 4 is a partially exploded view showing the feed
retaining trough and accompanying conveyor;

FIG. 5 is an exploded view showing a means by which a
feed conveying tube can be mounted in and upon the
trough;

FIG. 6 is a fragmentary elevational view showing a
portion of the feed trough and conveyor and an accompanying baffle plate;

FIG. 7 is a fragmentary elevational view in section
taken substantially in the plane of line 7-7 in FIG.
6;

FIG. 8 is an exploded view showing the relationship
of a feed-conveying conveyor tube, a trough shield,
and an accompanying trough baffle;

FIG. 9 is a fragmentary elevational view in section showing the feed conveyor tube and an accompanying auger and a feed dispensing hole in a given position; and

FIG. 10 is a view similar to FIG. 9 but showing the feed tube hole in an alternative position.

While the invention will be described in connection with a preferred embodiment, it will be understood that it is not intended to limit the invention to this embodiment. On the contrary, it is intended to cover all alternatives, modifications and equivalents as may be included within the spirit and scope of the invention as defined by the appended claims.

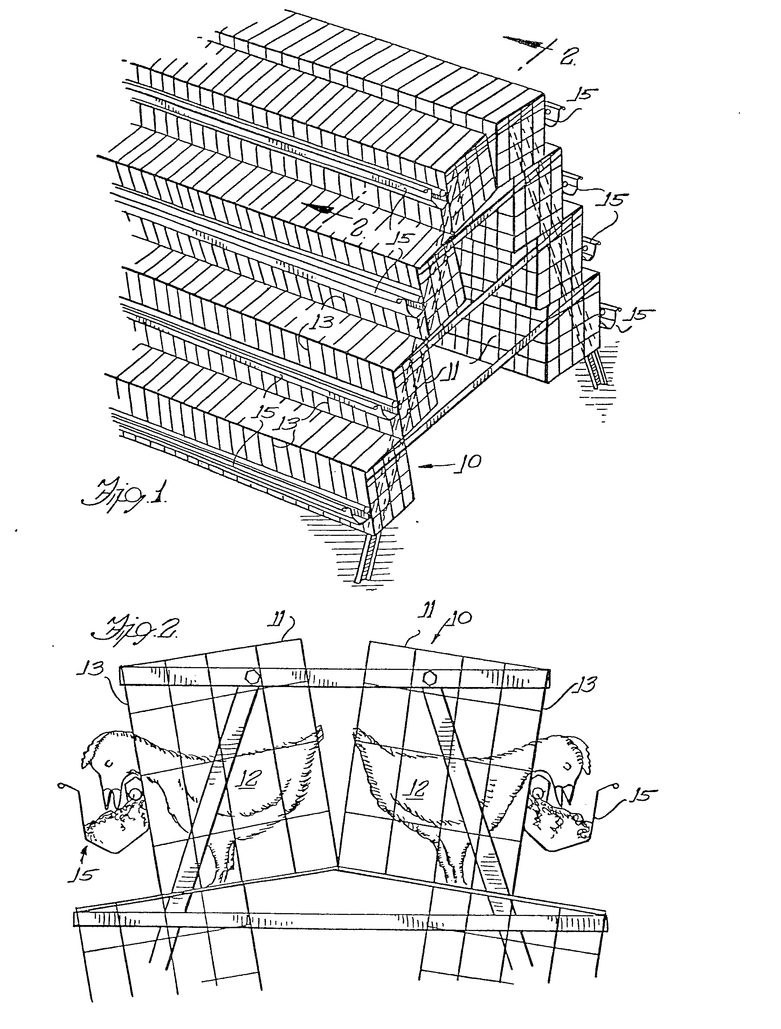

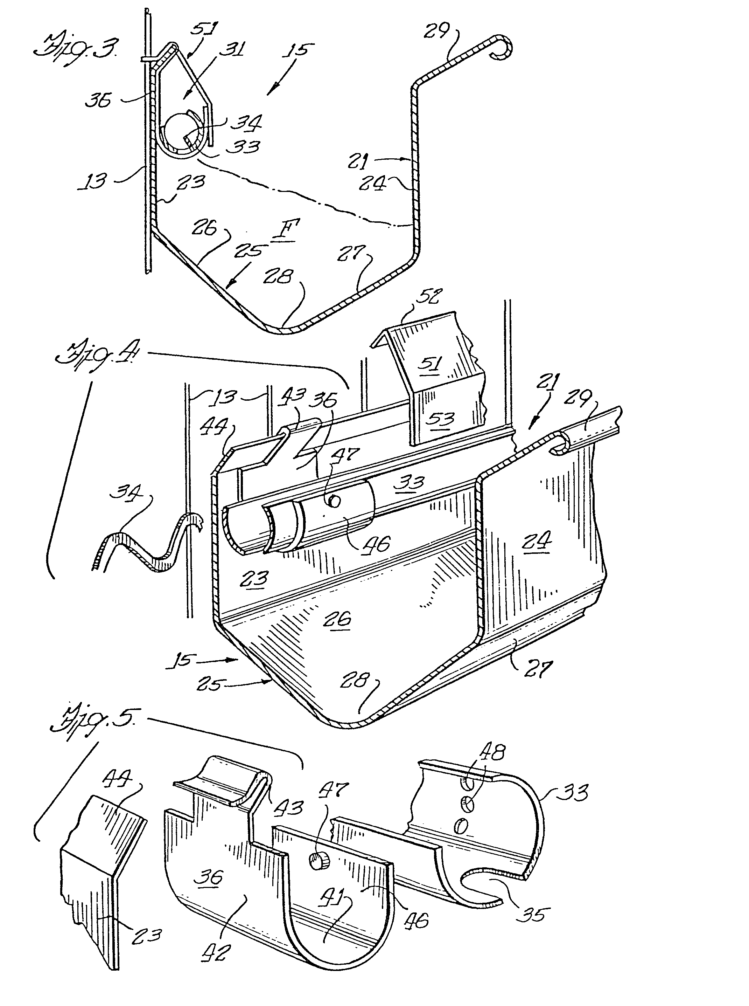

Turning first to FIGS. 1 and 2, there is shown an array 10 of cages 11 adapted to contain poultry 12 or like animals. Mounted along cage fronts 13 are the combination feed receiving and displaying trough and conveyor units 15 of the present invention. These conveyors and trough units 15 are mounted outside the poultry cages 11 to provide maximum space inside the cages 11, and to present delivered feed at a position where the contained poultry 12 will find and want to consume it.

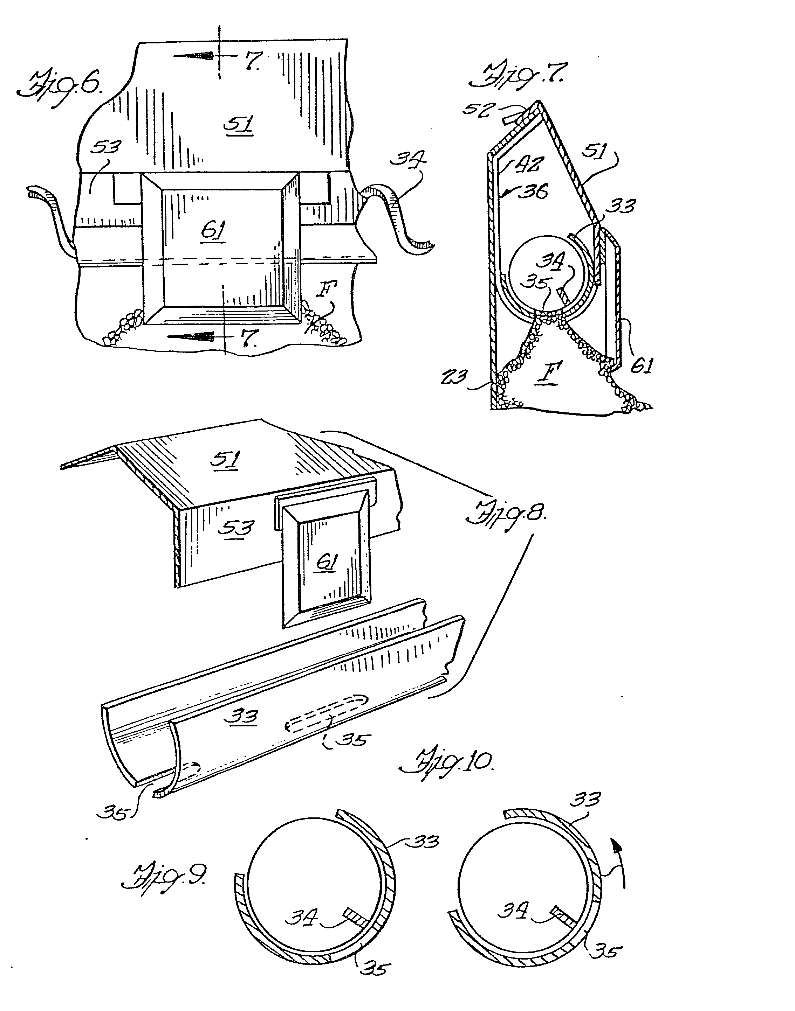

As shown more particularly in FIGS. 3 and 4, the novel trough and feeder units 15 include a trough 21 which here comprises an elongated member formed of galvanized steel or like suitable material. In accordance with one aspect of the invention, this trough 21 can be fabricated at minimum expense, shipped conveniently and erected quickly and easily. To this end, the trough member 21 is generally U-shaped, and includes a first vertical or upstanding wall 23 and a second generally upstanding wall 24 joined together by a V-shaped bottom 25. The bottom 25 can be considered to be defined by inclined portions 26 and 27 joined by a smoothly rounded lower portion 28. A shield 29 atop the second wall 24 inhibits the loss of feed when the poultry toss it about. Tossed feed is simply directed back toward and into the trough body by the shield 29.

The first wall 23 is disposed adjacent the cage front elements 13. Within the trough 21 and adjacent that first wall 23, the conveyor 31 is located. This conveyor comprises a conveyor tube 33 carried adjacent the first or inner trough wall 23 by a cradle clip 36. To reduce the cost of manufacture and simplify and reduce the cost of shipping in accordance with the invention, this conveyor tube 33 need not be entirely closed; that is, it can be somewhat U-shaped and open at the top as shown in FIGS. 3-5 and 7-10. To urge granular feed along this conveyor tube 33, an open helical auger member 34 is disposed within the conveyor tube 33. When the auger member 34 is rotated by an electric motor (not shown) or other suitable means, feed is urged along the conveyor tube 33.

This feed F can be dispensed through apertures or elongated holes 35 defined in the tube member 33 (FIGS. 5 and 7-10). The dispensation of a proper feed mix is encouraged by forming these apertures 35 so that they are elongated or of maximum dimension in a direction substantially parallel to the axis of the conveyor tube 33.

To hold the conveyor 31 in the positions illustrated
in FIGS. 3, 4 and 7, the clip 36 is provided with a
lower or cradle portion 41, an upwardly extending leg
42, and a reversely turned attachment portion 43 (FIG.5).
This attachment portion 43 is formed so as to fit snugly
over a diagonally inwardly turned portion 44 of the
first or inner trough leg 23.  In this way, the conveyor 31 is inexpensively held in the trough 21, but
is spaced above the trough bottom 25.

At a distal end 46 of the clip cradle 41, an interconnector pin embossment 47 is located to engage any one
of a number of mating apertures or holes 48 formed in
the conveyor tube 33.  By selecting an appropriate
hole 48, the feed dispensing aperture 35 can be located
relatively at or away from the lowest portion of the
conveyor tube 43, as can be envisioned from a comparison
of FIGS. 9 and 10.

In carrying out the invention, proper amounts and mixes
of the granular feed can be dispensed into the trough
21 by appropriately adjusting the angular position of
the conveyor tube 33 as these figures suggest.  Experimentation has indicated that good feed distribution
and dispensation can be obtained by positioning conveyor tube sections nearest the feed-supply end so
that the tube holes are located at a relatively high
spot on the tube, as indicated in FIG. 10.  Tube sections located at the opposite end of the elongated
trough and conveyor preferably have their holes located
at or near the lowest point or bottom of the tube.  Intermediate tube sections are positioned to locate their
tube holes 35 at intermediate locations as indicated in
FIG. 9.  If the position of these holes 35 were to be
observed, the observer would note that, at or near that end of the conveyor which receives feed from a supply source (not shown), the dispensing holes 35 are located with maximum angular displacement from the tube section bottoms, and that this angular displacement is in a direction toward the center of the underlying trough. Tube sections at the opposite end of the conveyor are disposed so as to locate the holes 35 most nearly (or at) the tube section bottoms. In this way, a hole array of descending, stepped, elongated, helical configuration is provided.

To prevent contamination of the feed being conveyed, and to inhibit the motion of the feed and auger 34 from being observed or pecked at by the caged poultry 12, a tube shield 51 is mounted in the position illustrated in FIGS. 3, 4, 6 and 7 over the conveyor tube 33. Here, this shield 51 is provided with an elongate finger portion 52 adapted to rest on or be secured over the diagonally upstanding trough element 44. A shield skirt 53 extends downwardly past the upper portions of the conveyor tube 33.

As indicated above, it is an object of the present invention to inhibit the caged poultry 12 from playing with feed F dispensed into the trough. It has been found that poultry are especially liable to play with or pick over this feed when they observe feed particle motion as the feed is being delivered. To discourage this observation, a baffle member 61 is secured to the shield member 51 so as to depend from the shield skirt 53 as illustrated in FIGS. 6-8 inclusive. These baffle members 61 can be either affixed to or formed in and on the shield skirt 53 wherever the conveyor tube feed dispensing apertures 35 are located but the baffle members 61 are spaced apart from the apertures 35. As can be envisioned, feed particles falling from the apertures 35 cannot be observed by the caged poultry. Preferably, each baffle member 61 has a greater dimension in the direction of the tube 33 axis than the tube aperture 35 which the baffle member 61 covers, in order to provide a complete particle motion hiding effect.

C L A I M S

1. Apparatus (15) for distributing feed to poultry (12) and the like, comprising the combination of a walled trough (21) for receiving feed and for presenting the received feed to the poultry (12), a conveyor tube (33) disposed within the trough (21) and defining a number of feed-dispensing tube apertures (35), means (34) for urging the feed along the conveyor tube, characterized by and baffle means (61) extending downwardly into the trough (21) and over the tube apertures (35) to prevent observation of feed dispensing motion from the apertures (35) by the receiving poultry (12).

2. Apparatus according to claim 1 further characterized by tube shield means (51) extending from a trough-defining wall (44) so as to cover the conveyor tube (33).

3. Apparatus according to claim 2 further characterized by said baffle (61) depending from said tube shield means (51).

4. Apparatus according to claim 1 further characterized by clip means (36) for securing the tube (33) to the trough (21).

5. Apparatus according to claim 1 further characterized by said baffle (61) having a greater dimension, measured axially along the direction of the tube axis, than the covered aperture (35).

6. Apparatus according to claim 1 further characterized in that said conveyor tube (33) comprises a plurality of communicating tube sections extending from a conveyor feed supply end to an opposite conveyor end, each tube section defining at least one tube aperture (35), and wherein the conveyor tube sections are positioned so as to locate the tube holes (35) in a stepped helical array.

7. Apparatus according to claim 6 further characterized in that said conveyor tube sections are positioned so as to locate the tube holes (35) in a stepped helical array having holes (35) near the conveyor feed supply end at positions of relatively maximum angular displacement from the tube bottom, and holes near the conveyor opposite end near the tube bottom.

8. Apparatus according to claim 7 further characterized by at least one tube section being positioned to angularly displace the holes (35) defined therein in a direction toward the middle of the underlying trough (21).

9. Apparatus according to claim 6 further characterized in that said tube sections define feed-dispensing holes (35) having an elongated dimension extending in the direction of the tube section axis.

10. Apparatus according to claim 1 further characterized by securing clip means (36) for securing the conveyor tube (33) in the trough (21).

11. Apparatus according to claim 1 further characterized by interconnector means (47) for fixing said tube (33) to said securing clip means (36).

12. Apparatus according to claim 11 further characterized in that said tube defines at least one feed-dispensing aperture (35), said interconnector means (47) securing the tube (33) in a given position relative to the interconnector means (47) and trough (21) to orient the aperture (35) in a predetermined angular location.

13. Apparatus according to claim 11 further characterized in that said interconnector means (47) includes
pin means (47) on said clip (36), and at least one pin-
receiving recess (48) defined in and on said tube.

14. Apparatus according to claim 10 further characterized in that said clip (36) includes a reversely turned
portion (43) adapted to engage a trough wall (44).

15. Apparatus according to claim 10 further characterized in that said clip (36) includes a dependent portion
(41) for supporting said tube (33) at a position spaced
above the trough bottom (25).

16. Apparatus according to claim 13 further characterized in that said tube (33) defines a plurality of pin-
receiving recesses (48), whereby to permit said tube
(33) to be secured in and on said clip (36) in any one
of a plurality of angular positions.

Fig.1.

Fig.2.

*Fig. 3.*

*Fig. 4.*

*Fig. 5.*

Fig.6.

Fig.7.

Fig.8.

Fig.9.

Fig.10.

European Patent
Office

**EUROPEAN SEARCH REPORT**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | A 01 K 39/00 |
| X | <u>AU - B - 413 248</u> (E.M. CAREW et al.)<br><br>* Page 2, paragraph 4 to page 3, paragraph 2; page 4, paragraph 7 to page 5, paragraph 1; claims 1-3; figures 1-6 *<br>--- | 1-5,9-12,15 | |
| D | <u>DE - A - 2 008 484</u> (CHORE-TIME EQUIPMENT INC.)<br><br>* Page 7, paragraph 4 to page 10, paragraph 1; page 11, paragraph 2 to page 12, paragraph 1; claims 7-13,17 *<br>& US - A - 3 611 995<br>--- | 4,6-12,15 | TECHNICAL FIELDS SEARCHED (Int. Cl.³) |
| D | <u>US - A - 3 776 191</u> (CHORE-TIME EQUIPMENT INC.)<br><br>* Column 3, lines 5-17; column 3, lines 30-39; column 4, lines 21-51; figures 7-10,12 * | 4,6-13,15,16 | A 01 K |
| | ---------- | | |

| | |
|---|---|
| | CATEGORY OF CITED DOCUMENTS |
| | X: particularly relevant<br>A: technological background<br>O: non-written disclosure<br>P: intermediate document<br>T: theory or principle underlying the invention<br>E: conflicting application<br>D: document cited in the application<br>L: citation for other reasons |

The present search report has been drawn up for all claims

&: member of the same patent family, corresponding document

| Place of search | Date of completion of the search | Examiner |
|---|---|---|
| The Hague | 29.05.1981 | NEHRDICH |

EPO Form 1503.1  06.78